# EUROPÄISCHE PATENTSCHRIFT

(11) **EP 1 704 312 B1**
(45) Veröffentlichungstag und Bekanntmachung des Hinweises auf die Patenterteilung: **05.09.2012**
(21) Anmeldenummer: 04804512.4
(22) Anmeldetag: 04.11.2004
(51) Int. Cl.: F02C 3/30, F02C 7/143, B05B 7/12

(54) **VERFAHREN ZUM BETRIEB EINER ZERSTÄUBUNGSVORRICHTUNG IN EINER GASTURBOGRUPPE**
METHOD FOR OPERATING AN ATOMISER IN A GAS TURBINE GROUP
PROCEDE POUR FAIRE FONCTIONNER UN DISPOSITIF DE PULVERISATION DANS UN GROUPE TURBINE A GAZ

(30) Priorität: 07.11.2003 DE 10352088
(43) Veröffentlichungstag der Anmeldung: 27.09.2006
(73) Patentinhaber: Alstom Technology Ltd, 5400 Baden (CH)
(72) Erfinder: HOFFMANN, Jürgen, CH-5417 Untersiggenthal (CH); JIMENEZ HÄRTEL, Carlos, 81247 München (DE); SAVIC, Sasha, CH-5430 Wettingen (CH)
(86) Internationale Anmeldenummer: PCT/EP2004/052794
(87) Internationale Veröffentlichungsnummer: WO 2005/045213

(56) Entgegenhaltungen:
- WO-A-00/08326
- WO-A-00/34638
- WO-A-03/035269
- WO-A-03/089777
- WO-A-2004/025102
- WO-A-2005/008044
- DE-A1- 10 042 325
- US-A1- 2001 000 611
- US-A1- 2002 141 882
- US-B1- 6 250 064
- US-B1- 6 478 289

## Beschreibung

### Technisches Gebiet

Die vorliegende Erfindung betrifft ein Verfahren gemäss dem Oberbegriff des Anspruchs 1.

### Stand der Technik

Es ist im Stand der Technik beispielsweise aus der FR 1563749 wohlbekannt, eine Flüssigkeit in den Ansaugtrakt von Verbrennungskraftmaschinen, wie beispielsweise Gasturbogruppen, einzudüsen. Durch die Verdunstung der Flüssigkeit wird die Ansaugluft abgekühlt, und die Leistung erhöht. Der Effekt lässt sich weiter steigern, wenn der eingespritzte Flüssigkeitsmassenstrom so gross gewählt ist, dass die Ansaugluft diesen nicht mehr aufzunehmen vermag, also mit Flüssigkeit übersättigt wird, derart, dass wenigstens ein Teil der Flüssigkeit erst während der Verdichtung verdampft. Wenn also Flüssigkeitstropfen in den weitgehend adiabaten Turboverdichter einer Gasturbogruppe eindringen, so resultiert aus der Verdunstung im Verdichter eine intensive Innenkühlung, und die Leistungsaufnahme des Verdichters wird verringert, was die Netto-Leistungsabgabe der Gasturbogruppe signifikant zu erhöhen vermag.

Die Bedeutung der Feinheit des eingedüsten Tropfensprays ist ebenfalls aus der FR 1563749 bekanntgeworden.

In der EP 898645 ist die Verwendung von Druckzerstäuberdüsen beschrieben. In der WO 9967519 ist beschrieben, unter Druck stehendes Heisswasser beim Düsenaustritt durch spontanes Sieden zu zerstäuben.
In beiden Fällen wird die Zerstäubungsflüssigkeit mit hohem Druck durch Düsen mit vergleichsweise kleinen Durchtrittsquerschnitten zerstäubt. Eine potenzielle Erosion der Düsen ist nicht auszuschliessen, und führt zu einer tendenziell signifikanten Verschlechterung der Qualität des erzeugten Sprays, falls keine entsprechenden Gegenmassnahmen getroffen werden.

WO03089777 gibt ein Verfahren an, bei dem mittels einer Vorrichtung mit Druckzerstäuberdüsen Flüssigkeit in den Ansaugtrakt einer Verbrennungskraftmaschine eingedüst wird. In einer Versorgungsleitung für die Zerstäuberdüsen ist eine Druckmessstelle angeordnet, so dass der Zerstäubungsvordruck geregelt werden kann. Der Massenstrom wird durch die Beaufschlagung unterschiedlicher Düsen eingestellt. Auch hierbei wird aber vorausgesetzt, dass die Druck-Massenstrom-Kennlinien der Düsen bekannt und invariant sind.

### Darstellung der Erfindung

Hier will die Erfindung Abhilfe schaffen. Der in den Ansprüchen gekennzeichneten Erfindung liegt die Aufgabe zugrunde, ein Verfahren der eingangs genannten Art anzugeben, welches die Nachteile des Standes der Technik zu vermeiden vermag. Es soll ein Verfahren angegeben werden, mit dem sich Alterungseffekte, die in erster Linie durch Erosion von Düsen hervorgerufen werden, während des Betriebes beobachten und quantifizieren lassen. Die Parameter des zerstäubten Spray sollen weiterhin durch geeignete Massnahmen so lange als möglich in zulässigen Bereichen gehalten werden.

Erfindungsgemäss wird diese Aufgabe unter Verwendung der Gesamtheit der Merkmale des Anspruchs 1 gelöst.

Kern der Erfindung ist es also, innerhalb einer Flüssigkeitszerstäubungsvorrichtung simultan den Zerstäubungsvordruck und den Massenstrom zu messen, und abhängig von wenigstens einem der Messwerte auf ein Stellglied zur Einstellung des Zerstäubungsvordruckes und/oder des Massenstroms einzuwirken. Gemäss der Erfindung wird das erste Stellglied im geschlossenen Regelkreis betrieben. Bei vorgegebenen Düsengeometrien und -querschnitten ist der Massenstrom im Wesentlichen der Quadratwurzel des Zerstäubungsvordruckes proportional. Der Zerstäubungsvordruck ist mitentscheidend für das Tropfengrössenspektrum des erzeugten Sprays. Zur druckunabhängigen Variation des Massenstroms ist es bekannt, die Anzahl der flüssigkeitsbeaufschlagten Düsen zu verändern. Das erste Stellglied ist bevorzugt ein drehzahlregelbarer Antrieb einer Pumpe, oder ein in einer von einer Pumpe zu einer Druckzerstäuberdüse führenden Leitung angeordnetes variables Drosselorgan.

Das Stellglied wird mit dem Zerstäubungsvordruck als Regelgrösse betrieben. Auf das Stellglied wird also abhängig von dem gemessenen Zerstäubungsvordruck eingegriffen.

Das erste Stellorgan dient zur Regelung des Zerstäubungs-Vordruckes. Dabei dient die Anzahl der flüssigkeitsbeaufschlagten Zerstäubungsdüsen als Massenstrom-Stellgrösse. Das erste Stellorgan wird mit dem Zerstäubungs-Vordruck als Regelgrösse im geschlossenen Regelkreis betrieben. Die Anzahl der flüssigkeitsbeaufschlagten Düsen wird mit dem Massenstrom als Regelgrösse im geschlossenen Regelkreis betrieben.

Gemäss einer alternativen Ausführungsform der Erfindung dient das erste Stellorgan zur Regelung des Flüssigkeitsmassenstroms. Dabei dient die Anzahl der flüssigkeitsbeaufschlagten Zerstäubungsdüsen als Zerstäubungsvordruck-Stellgrösse. Das erste Stellorgan wird mit dem Flüssigkeitsmassenstrom als Regelgrösse im geschlossenen Regelkreis betrieben. Die Anzahl der flüssigkeitsbeaufschlagten Düsen wird mit dem Zerstäubungs-Vordruck als Regelgrösse im geschlossenen Regelkreis betrieben.

Zur Beaufschlagung von Zerstäuberdüsen werden bevorzugt Schaltventile selektiv geöffnet und geschlossen. Dabei wird über jeweils ein Schaltventil entweder eine einzelne Zerstäuberdüse angesteuert, oder bevorzugt eine Gruppe von Zerstäuberdüsen.

In einer Weiterbildung der Erfindungsidee wird eine Korrelation von gemessenem Druck und Massenstrom gebildet. Dies wird mit einer Referenzkorrelation verglichen. Die Referenzkorrelation wird entweder theoretisch vorgegeben, oder es wird im Neuzustand der Zerstäubungsvorrichtung die Druck-Massenstrom-Kennlinie - respektive Kennlinien für unterschiedliche beaufschlagte Düsenanzahlen - bestimmt. Wenn die gemessene Korrelation um mehr als einen fallweise festzulegenden maximal zulässigen Grenzwert von der Referenzkorrelation abweicht, wird dies als Mass für einen übermässigen Verschleiss der Zerstäuberdüsen gewertet. Als Aktionen kann eine Wam- oder Alarmmeldung herausgegeben werden, und/oder die Flüssigkeitseinspritzung wird gegebenenfalls ausser Betrieb genommen. Die Korrelation kann besonders einfach ermittelt werden, indem die Proportionalitätskonstante zwischen dem Massenstrom-Quadrat und dem Druck bestimmt wird, wobei deren Abweichung von einem Referenzwert ein Mass für den Verschleiss der Zerstäubungsvorrichtung darstellt.

In einer Ausgestaltung des Verfahrens wird die Flüssigkeit stromauf des Verdichters einer Gasturbogruppe oder innerhalb des Verdichters in den Arbeitsluftstrom der Gasturbogruppe eingedüst. Dabei wird der Massenstrom innerhalb der Leistungsregelung der Gasturbogruppe eingestellt, und dient als Stellgrösse des Leistungs-Regelkreises. Insbesondere kann die Steuerung der Gasturbogruppe einen Massenstrom fest vorgeben, der dann gemäss einem der oben beschriebenen Verfahren geregelt wird.

### Kurze Beschreibung der Zeichnung

Die Erfindung wird nachfolgend anhand von in der Zeichnung illustrierten Ausführungsbeispielen näher erläutert. Die Figuren zeigen zwei Ausführungsformen von efindungsgemäss betreibbaren Zerstäubungsvorrichtungen in Kraftwerksanlagen. Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

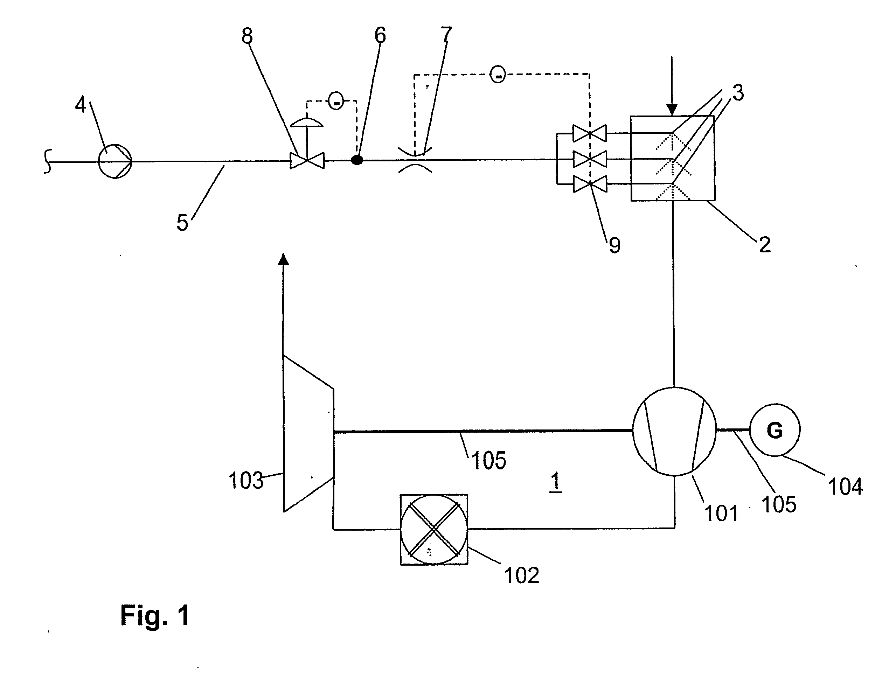

Eine Ausführungsform der Erfindung ist in Verbindung mit Figur 1 beschrieben. Eine Gasturbogruppe 1 weist einen Verdichter 101, eine Brennkammer 102 und eine Turbine 103 auf. Die Turbine 103 und der Verdichter 101, sowie ein Generator 104 sind auf einem gemeinsamen Wellenstrang 105 angeordnet. Im Zuströmkanal des Verdichters, durch welchen im Betrieb Luft zum Verdichter 101 strömt, ist eine Eindüsungsvorrichtung 2 angeordnet, welche eine Mehrzahl getrennt ansteuerbarer Zerstäuberdüsen oder Düsengruppen 3 aufweist. Durch die Düsen 3 kann ein Flüssigkeitsnebel erzeugt werden, der stromauf des Verdichters oder im Verdichter verdunstet, und somit auf die beschriebene Weise eine Steigerung der Netto-Leistungsabgabe der Gasturbogruppe bewirkt. Eine Pumpe 4 fördert die Flüssigkeit auf den Zerstäubungsvordruck. Die Flüssigkeit strömt durch die Leitung 5 zu den Schaltventilen 9, von wo aus der Strömungsweg zu den Zerstäuberdüsen 3 selektiv freigegeben wird. Erfindungsgemäss sind in der Leitung 5 eine Druckmessstelle 6 und eine Massenstrommessstelle 7 angeordnet. Ausgehend von dem gemessenen Zerstäubungsvordruck an der Druckmessstelle 6 wird das Stellorgan 8, hier ein Drosselorgan, angesteuert. Wenn der gemessene

Druck unter einem Sollwert liegt, wird das Drosselorgan 8 weiter geöffnet. Wenn der gemessene Druck über einem Sollwert liegt, wird das Drosselorgan 8 stärker gedrosselt. Auf diese Weise wird der Zerstäubungsvordruck auf einen Sollwert oder innerhalb eines Sollwertintervalls geregelt. Die Regelung kann als kontinuierliche oder diskontinuierliche Regelung, besonders einfach als Zweipunktregelung, ausgeführt sein. Wenn die Pumpe 4 einen drehzahlvariablen Antrieb aufweist, kann ausgehend vom Druckmesswert auf die Drehzahl der Pumpe eingewirkt werden, in der Art, dass bei Unterschreiten eines Druck-Sollwertes die Pumpendrehzahl erhöht wird, und bei Überschreiten des Druck-Sollwertes die Pumpendrehzahl vermindert wird. Bei ansonsten unveränderten Bedingungen bewirkt eine Druckveränderung selbstverständlich auch eine Massenstromänderung in der Zerstäubungsvorrichtung. Dabei ist der Zerstäubungsvordruck im Wesentlichen, abgesehen von untergeordneten Einflussgrössen wie Reibungseffekten, dem Quadrat des Massenstroms proportional. Bei Druckzerstäubervorrichtungen, bei denen der Druckabfall der Zerstäubungsflüssigkeit hauptsächlich über die Zerstäuberdüsen erfolgt, ist die Proportionalitätskonstante nahezu nur eine Funktion der Anzahl und Geometrie der Zerstäuberdüsen. Mit einer im Laufe des Betriebes potenziell einsetzenden Erosion der Zerstäuberdüsen ändert sich diese Proportionalitätskonstante. Sie verändert sich ebenfalls, wenn Düsen des Zerstäubungssystems durch Verschmutzung zugesetzt werden, oder wenn Schäden am System auftreten. Auf besonders einfache Weise kann im Neuzustand der Zerstäubungsvorrichtung die Proportionalitätskonstante ermittelt werden, respektive ein Satz von Proportionalitätskonstanten, der abhängig von der Anzahl und gegebenenfalls der Art der beaufschlagten Zerstäuberdüsen ermittelt wird. Diese Werte werden als Referenzkonstanten herangezogen. Mittels der fortwährenden Messung von Zerstäubervordruck und Massenstrom während der Betriebszeit kann diese Proportionalitätskonstante zu beliebigen Zeitpunkten während des Betriebes erfasst werden. Dies ermöglicht es einerseits, Trendkurven der Proportionalitätskonstanten aufzuzeichnen, aus welchen sich der Verschleiss oder sonstige Veränderungen der Zerstäubungskomponenten wie beispielsweise Verschmutzung, ablesen lassen. Andererseits kann eine aktuell ermittelte Korrelation von Massenstrom und Zerstäubungsvordruck mit der im Neuzustand ermittelten Referenzkorrelation verglichen werden, in der Weise, dass bei einer Abweichung, welche einen zulässigen Grenzwert erachtet, eine Warnmeldung herausgegeben wird, oder die Zerstäubungsvorrichtung aus Sicherheitsgründen ausser Betrieb genommen wird.

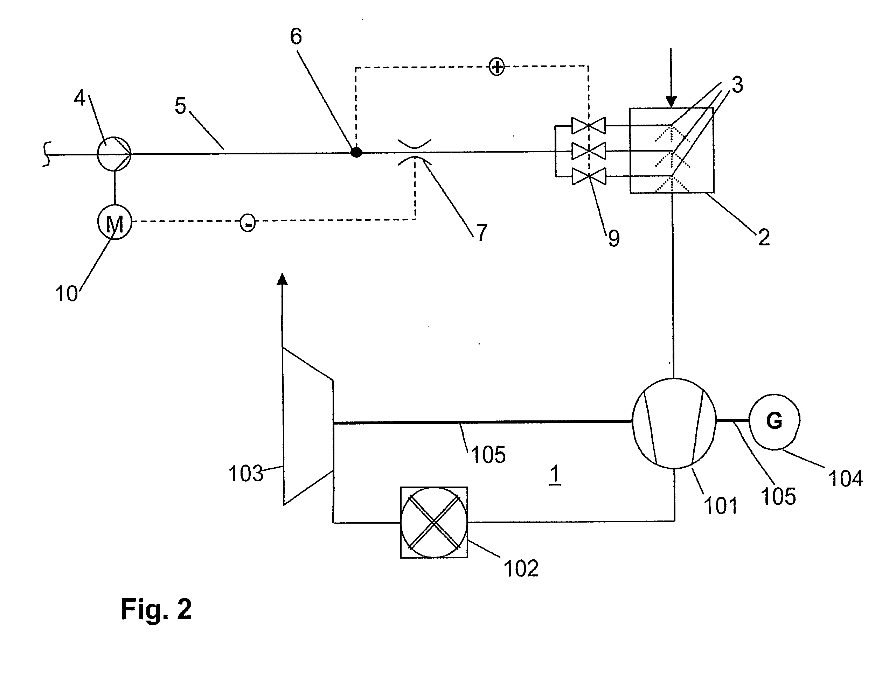

Bei der in Figur 2 dargestellten Ausführungsform weist die Pumpe der Zerstäubungsvorrichtung einen drehzahlregelbaren Antrieb 10 auf. Der drehzahlregelbare Anrieb wird bei der dargestellten Ausführungsform als Stellgrösse für eine Regelung des Massenstroms verwendet. Wenn der gemessene Massenstrom unter einen Sollwert sinkt, wird die Drehzahl erhöht. Wenn der gemessene Massenstrom über einen Sollwert steigt, wird die Drehzahl vermindert. Die Anzahl der im Betrieb befindlichen Düsen oder Düsengruppen wird als Stellgrösse für den Zerstäubungsvordruck verwendet. Wenn der Zerstäubungsvordruck über einen Sollwert steigt, werden grössere Strömungsquerschnitte freigegeben; insbesondere werden in der dargestellten Ausführungsform weitere Schaltventile 9 geöffnet. Wenn der Zerstäubungsvordruck unter einen Sollwert fällt, werden die freien Strömungsquerschnitte verkleinert; insbesondere werden in der dargestellten Ausführungsform Schaltventile 9 geschlossen. Aufgrund der Korrelation von Massenstrom und Druck kann durchaus vollkommen gleichwertig die Pumpendrehzahl als Stellgrösse für den Zerstäubungsvordruck und die Anzahl der in Betrieb befindlichen Düsen oder Düsengruppen als Stellgrösse für den Massenstrom herangezogen werden. Die gemessenen Werte für den Zerstäubungsvordruck und den Massenstrom können in der in Zusammenhang mit Figur 1 geschilderten Weise für Diagnosezwecke herangezogen werden.

### Bezugszeichenliste

- 1: Gasturbogruppe
- 2: Eindüsungsvorrichtung
- 3: Zerstäuberdüsen
- 4: Pumpe
- 5: Leitung
- 6: Druckmessstelle
- 7: Massenstrom-Messstelle
- 8: Stellorgan, Drosselorgan
- 9: Schaltventile
- 10: drehzahlregelbarer Antrieb
- 101: Verdichter
- 102: Brennkammer
- 103: Turbine
- 104: Generator
- 105: Welle

## Patentansprüche

1. Verfahren zum Betrieb einer Flüssigkeitszerstäubungsvorrichtung im Ansaugtrakt einer Verbrennungskraftmaschine, wobei die Flüssigkeitszerstäubungsvorrichtung umfasst: ein Leitungssystem (5), Druckzerstäuberdüsen (3), wenigstens eine Leitung für die zu zerstäubende Flüssigkeit, wenigstens ein erstes Stellglied (8, 10) zur Einstellung des Zerstäubungsvordruckes und/oder des Flüssigkeitsrmassenstroms durch die Zerstäubungsvorrichtung; welches Verfahren **gekennzeichnet ist durch** die Schritte: den **durch** die Flüssigkeitszerstäubungsvorrichtung strömenden Massenstrom zu messen, den Zerstäubungsvordruck stromauf der Druckzerstäuberdüse zu messen, und abhängig von wenigstens einem dieser Messwerte auf das erste Stellglied einzuwirken, einen Sollwert oder ein Sollwertintervall für den Zerstäubungsvordruck vorzugeben,
auf das erste Stellglied derart einzuwirken, dass der Zerstäubungsvordruck auf den Sollwert oder innerhalb des Sollwertintervalls eingeregelt wird,
einen Sollwert oder ein Sollwertintervall für den Massenstrom vorzugeben, eine unterschiedliche Anzahl von Zerstäuberdüsen mit Flüssigkeit zu beaufschlagen; und
auf die Anzahl der flüssigkeitsbeaufschlagten Zerstäuberdüsen derart einzuwirken, dass der Massenstrom auf den Sollwert oder innerhalb des Sollwertintervalls eingeregelt wird.

2. Verfahren gemäss Anspruch 1, **dadurch gekennzeichnet, dass** zur Beaufschlagung von Zerstäuberdüsen mit Flüssigkeit Absperrorgane, insbesondere Schaltventile, geöffnet werden.

3. Verfahren gemäss einem der vorstehenden Ansprüche, **gekennzeichnet durch** die weiteren Schritte:
eine Korrelation von gemessenem Druck und Massenstrom zu bilden;
die gemessene Korrelation mit einer Referenz-Korrelation zu vergleichen; bei einer Abweichung zwischen der gemessenen Korrelation und der Referenz-Korrelation, welche einen Schwellenwert übersteigt, eine Alarmmeldung auszugeben und/oder die Flüssigkeitseindüsung ausser Betrieb zu setzen.

4. Verfahren gemäss Anspruch 3, **dadurch gekennzeichnet, dass** eine Grösse gebildet wird, welche im Wesentlichen das Quadrat des Massenstroms und den Zerstäubungsvordruck miteinander ins Verhältnis setzt.

5. Verfahren nach einem der Ansprüche 6 oder 7, **dadurch gekennzeichnet, dass** die Referenz-Korrelation in Abhängigkeit von der Anzahl der flüssigkeitsbeaufschlagten Zerstäuberdüsen vorgegeben wird.

6. Verfahren gemäss einem der vorstehenden Ansprüche, **dadurch gekennzeichnet, dass** der Flüssigkeitsmassenstrom stromauf des Verdichters einer Gasturbogruppe oder innerhalb des Verdichters einer Gasturbogruppe eingedüst wird, und der Massenstrom innerhalb der Leistungsregelung der Gasturbogruppe eingestellt wird, wobei der Massenstrom die Stellgrösse des Regelkreises ist.

## Claims

1. Method of operating a liquid atomizing arrangement in the intake line of an internal combustion engine, the liquid atomizing arrangement comprising: a line system (5), pressure atomizer nozzles (3), at least one line for the liquid to be atomized, at least one first actuator (8, 10) for setting the atomizing supply pressure and/or the liquid mass flow through the atomizing arrangement; which method is **characterized by** the following steps: measuring the mass flow flowing through the liquid atomizing arrangement, measuring the atomizing supply pressure upstream of the pressure atomizer nozzle and acting upon the first actuator as a function of at least one of these measured values, predetermining a setpoint or a setpoint interval for the atomizing supply pressure and acting upon the first actuator in such a way that the atomizing supply pressure is adjusted to the setpoint or within the setpoint interval, predetermining a setpoint or a setpoint interval for the mass flow, admitting liquid to a different number of atomizer nozzles, and acting upon the number of atomizer nozzles to which liquid is admitted in such a way that the mass flow is adjusted to the setpoint or within the setpoint interval.

2. Method according to Claim 1, **characterized in that** shut-off members, in particular control valves, are opened in order to admit liquid to atomizer nozzles.

3. Method according to one of the preceding claims, **characterized by** the further steps of: forming a correlation of measured pressure and mass flow; comparing the measured correlation with the reference correlation; transmitting an alarm signal and/or shutting down the liquid injection in the event of a deviation between the measured correlation and the reference correlation which exceeds a threshold value.

4. Method according to Claim 3, **characterized in that** a variable is formed which essentially relates the square of the mass flow and the atomizing supply pressure to one another.

5. Method according to either of Claims 3 and 4, **characterized in that** the reference correlation is predetermined as a function of the number of atomizer nozzles to which liquid is admitted.

6. Method according to one of the preceding claims, **characterized in that** the liquid mass flow is injected upstream of the compressor of a gas turboset or inside the compressor of a gas turboset, and the mass flow is set within the power control of the gas turboset, the mass flow being the manipulated variable of the control loop.

## Revendications

1. Procédé pour faire fonctionner un dispositif de pulvérisation de fluide pendant le temps d'admission d'un moteur à combustion interne, le dispositif de pulvérisation de fluide comprenant : un système de conduites (5), des buses de pulvérisation sous pression (3), au moins une conduite pour le fluide à pulvériser, au moins un premier élément de réglage (8, 10) pour régler la prépression de pulvérisation et/ou le débit massique du fluide traversant le dispositif de pulvérisation, ledit procédé étant **caractérisé par** les étapes suivantes :
mesure du débit massique traversant le dispositif de pulvérisation de fluide ;
mesure de la prépression de pulvérisation en amont de la buse de pulvérisation sous pression ; et
en fonction d'au moins une de ces valeurs de mesure, intervention sur le premier élément de réglage ;
prédéfinition d'une valeur théorique ou d'un intervalle de valeur théorique pour la prépression de pulvérisation ;
intervention sur le premier élément de réglage de telle sorte que la prépression de pulvérisation soit réglée sur la valeur théorique ou à l'intérieur de l'intervalle de valeur théorique ;
prédéfinition d'une valeur théorique ou d'un intervalle de valeur théorique pour le débit massique ;
alimentation d'un nombre différent de buses de pulvérisation en fluide ; et
intervention sur le nombre de buses de pulvérisation alimentées en fluide de telle sorte que le débit massique est réglé sur la valeur théorique ou à l'intérieur d'un intervalle de valeur théorique.

2. Procédé selon la revendication 1, **caractérisé en ce que** l'alimentation des buses de pulvérisation en liquide se fait en ouvrant des organes d'arrêt, notamment des soupapes de commutation.

3. Procédé selon l'une quelconque des revendications précédentes, **caractérisé par** les étapes supplémentaires suivantes :
mise en corrélation de la pression mesurée et du débit massique ;
comparaison de la corrélation mesurée avec une corrélation de référence ;
en cas d'écart entre la corrélation mesurée et la corrélation de référence dépassant une valeur seuil,
envoi d'un message d'alarme et/ou mise hors service de l'alimentation des buses de fluide.

4. Procédé selon la revendication 3, **caractérisé en ce qu'**une grandeur est formée constituant un rapport entre pour l'essentiel le carré du débit massique et la prépression de pulvérisation.

5. Procédé selon l'une quelconque des revendications 3 ou 4, **caractérisé en ce que** la corrélation de référence est prédéfinie en fonction du nombre de buses de pulvérisation alimentées en fluide.

6. Procédé selon l'une quelconque des revendications précédentes, **caractérisé en ce que** le débit massique du fluide est amené aux buses en amont du compresseur d'un groupe de turbines à gaz ou à l'intérieur du compresseur d'un groupe de turbines à gaz et **en ce que** le débit massique est réglé dans le cadre du réglage de puissance du groupe de turbines à gaz, le débit massique étant la grandeur de réglage du circuit de réglage.
